# EUROPEAN PATENT APPLICATION

(11) **EP 4 657 948 A1**
(43) Date of publication of application: **03.12.2025**
(21) Application number: 23941588.8
(22) Date of filing: 14.06.2023
(51) Int. Cl.: H04W 72/0457, H04W 16/32, H04W 24/10

(54) **USER EQUIPMENT, NODE, AND COMMUNICATION METHOD**

(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/022154
(87) International publication number: WO 2024/257284

(57) **Abstract**

A user equipment performs wireless communication with a master node and a secondary node by using dual connectivity in a mobile communication system. The user equipment includes: a receiver configured to receive, from the master node, information indicating a wireless quality condition required for the user equipment when deactivation processing is performed for a secondary cell group of the secondary node; and a controller configured to measure wireless quality for the secondary cell group and evaluate whether the wireless quality condition is met. The controller performs the deactivation processing for the secondary cell group in response to the wireless quality condition being met.

## Description

### TECHNICAL FIELD

The present disclosure relates to a user equipment, a node, and a communication method.

### BACKGROUND OF INVENTION

The 3rd generation partnership project (3GPP (registered trademark; the same applies hereinafter)), which is a standardization project for mobile communication systems, defines technical specifications for dual connectivity (DC). In DC, a user equipment (UE) performs wireless communication with a master cell group (MCG) of a master node (MN) and a secondary cell group (SCG) of a secondary node (SN).

In each of the MCG and SCG, a plurality of component carriers (CCs) corresponding to a plurality of serving cells are aggregated, and a UE can simultaneously receive or transmit on a plurality of CCs (a plurality of cells). The plurality of CCs may be contiguous or discontinuous in the frequency direction. One serving cell of each of the MCG and SCG is referred to as a primary cell (PCell), and a set of serving cells is formed by configuring one or more secondary cells (SCells) together with the PCell in a UE. Note that the PCell is also referred to as an SpCell. The PCell (SpCell) of the SCG is also referred to as a PSCell.

Release 17 of the 3GPP standard introduces the specification for deactivation of SCGs. The deactivation of an SCG that has been set to an active state is generally performed in the following procedure. First, the UE transmits a measurement report message including a measurement result of the wireless quality of each cell to the MN. Second, based on the measurement report message, the MN instructs the UE to deactivate the SCG by using a radio resource control (RRC) message. Third, the UE deactivates the SCG in response to the instruction. Deactivating the SCG causes the SCG to transition from an active state to an inactive state, disabling wireless communication using the SCG.

This type of control has a problem that shortening a period of time from when the wireless quality for the SCG deteriorates in the UE until when wireless communication using the SCG is disabled poses a challenge.

### CITATION LIST

### NON-PATENT LITERATURE

Non-Patent Document 1: 3GPP Technical specification: TS 38.300 V17.3.0 (2022-12)

### SUMMARY

In a first aspect, a user equipment performs wireless communication with a master node and a secondary node by using dual connectivity in a mobile communication system. The user equipment includes: a receiver configured to receive, from the master node, information indicating a wireless quality condition required for the user equipment when deactivation processing is performed for a secondary cell group of the secondary node; and a controller configured to measure wireless quality for the secondary cell group and evaluate whether the wireless quality condition is met. The controller is configured to perform the deactivation processing for the secondary cell group in response to the wireless quality condition being met.

In a second aspect, a node operates as a master node in a mobile communication system including a user equipment for performing wireless communication with the master node and a secondary node by using dual connectivity. The node includes: a controller configured to configure a secondary cell group of the secondary node in the user equipment; and a transmitter configured to transmit, to the user equipment, information indicating a wireless quality condition required for the user equipment when deactivation processing is performed for the secondary cell group.

In a third aspect, a communication method is used in a user equipment for performing wireless communication with a node by using dual connectivity in a mobile communication system. The communication method includes the steps of: receiving, from the node, information indicating a wireless quality condition required for the user equipment when deactivation processing is performed for a secondary cell group configured in the user equipment; measuring wireless quality for the secondary cell group and evaluating whether the wireless quality condition is met; and performing the deactivation processing for the secondary cell group in response to the wireless quality condition being met.

In a fourth aspect, a communication method is used in a node for performing wireless communication with a user equipment by using dual connectivity in a mobile communication system. The communication method includes the steps of: configuring a secondary cell group to the user equipment; and transmitting, to the user equipment, information indicating a wireless quality condition required for the user equipment when deactivation processing is performed for the secondary cell group.

### BRIEF DESCRIPTION OF THE DRAWINGS

FIG. 1 is a diagram illustrating a configuration example of a mobile communication system according to an embodiment.
FIG. 2 is a diagram illustrating a configuration example of a protocol stack of a U-plane radio interface that handles data.
FIG. 3 is a diagram illustrating a configuration example of a protocol stack of a C-plane radio interface that handles signaling (control signals).
FIG. 4 is a diagram for describing a terahertz (THz) wave cell according to the embodiment.
FIG. 5 is a diagram for describing dual connectivity (DC) according to the embodiment.
FIG. 6 is a diagram illustrating a general procedure for configuring and activating an SCG.
FIG. 7 is a diagram illustrating a general procedure for deactivating an SCG.
FIG. 8 is a diagram illustrating a configuration example of a user equipment (UE) according to the embodiment.
FIG. 9 is a diagram illustrating a configuration example of a node according to the embodiment.
FIG. 10 is a diagram illustrating an operation example of a system according to a first embodiment.
FIG. 11 is a diagram for describing a bandwidth portion (BWP).
FIG. 12 is a diagram illustrating an operation example of a system according to a second embodiment.
FIG. 13 is a diagram illustrating a specific example of a reference signal (Fast tracking RS) according to a third embodiment.
FIG. 14 is a diagram illustrating an operation example of a system according to the third embodiment.

### DESCRIPTION OF EMBODIMENTS

A mobile communication system according to embodiments will be described below with reference to the drawings. In the description of the drawings, the same or similar parts are denoted by the same or similar reference signs.

### (1) First Embodiment

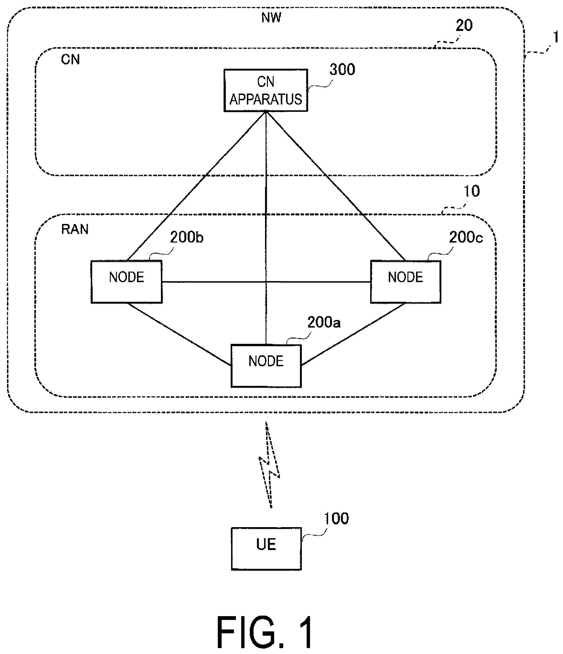

A first embodiment will be described with reference to FIG. 1 to FIG. 10.

### (1.1) System Configuration Example

FIG. 1 is a diagram illustrating a configuration example of a mobile communication system according to an embodiment. The mobile communication system according to the embodiment is a system conforming to the 3GPP standard. For example, the mobile communication system according to the embodiment may be a 5th generation (5G) system or a 6th generation (6G) system.

The mobile communication system includes a network (NW) 1 and a user equipment (UE) 100. The UE 100 is a mobile communication apparatus and performs wireless communication with the NW 1. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE).

The NW 1 includes a radio access network (RAN) 10 and a core network (CN) 20. When the mobile communication system is a 5th generation system (5GS), the RAN 10 is referred to as a next generation radio access network (NG-RAN) and the CN 20 is referred to as a 5G core network (5GC).

The RAN 10 includes a plurality of nodes 200 (nodes 200a to 200c in the illustrated example). The nodes 200 are connected to each other via inter-node interfaces. The node 200 is also referred to as a base station. The node 200 may be configured (that is, functionally divided) into a central unit (CU) and a distributed unit (DU), and both units may be connected by a fronthaul interface. When the mobile communication system is a 5GS, the node 200 is referred to as a gNB, the inter-node interface is referred to as an Xn interface, and the fronthaul interface is referred to as an F1 interface.

Each node 200 manages one or more cells. The node 200 performs wireless communication with the UE 100 that has established a connection with its own cell. Each node 200 has a radio resource management (RRM) function, a routing function for user data (also simply referred to as "data"), a measurement control function for mobility control and scheduling, and the like. Note that a "cell" is used as a term indicating a minimum unit of a wireless communication area. The "cell" is also used as a term representing a function or a resource for performing wireless communication with the UE 100. One cell belongs to one carrier frequency (also simply referred to as a "frequency").

The CN 20 includes a CN apparatus 300. The CN apparatus 300 may include a control plane (C-plane) apparatus corresponding to the C-plane, and a user plane (U-plane) apparatus corresponding to the U-plane. The C-plane apparatus performs various mobility control, paging, and the like for the UE 100. The C-plane apparatus communicates with the UE 100 by using non-access stratum (NAS) signaling. The U-plane apparatus controls the transfer of data. When the mobile communication system is a 5GS, the C-plane apparatus is referred to as an access and mobility management function (AMF), the U-plane apparatus is referred to as a user plane function (UPF), and the interface between the node 200 and the CN apparatus 300 is referred to as an NG interface.

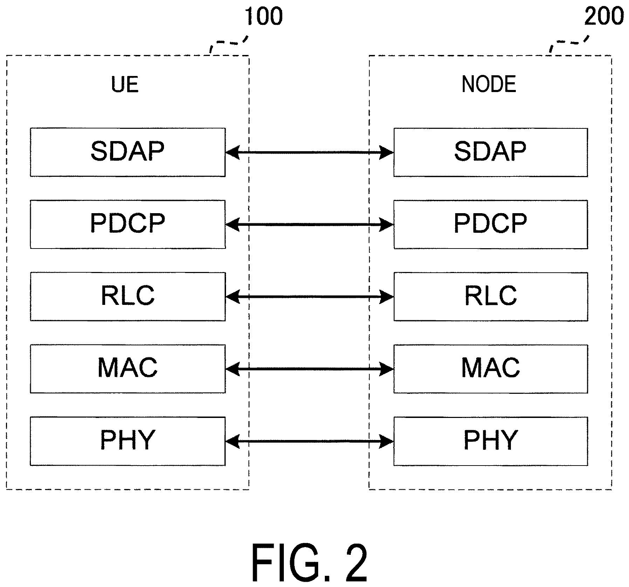

FIG. 2 is a diagram illustrating a configuration example of a protocol stack of a U-plane radio interface that handles data.

The protocol of the U-plane radio interface includes, for example, a physical (PHY) layer, a medium access control (MAC) layer, a radio link control (RLC) layer, a packet data convergence protocol (PDCP) layer, and a service data adaptation protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the node 200 via a physical channel. Note that the PHY layer of the UE 100 receives downlink control information (DCI) transmitted from the node 200 on a physical downlink control channel (PDCCH). Specifically, the UE 100 performs blind decoding of the PDCCH by using a radio network temporary identifier (RNTI) and acquires a successfully decoded DCI as a DCI addressed to the UE. The DCI transmitted from the node 200 has CRC parity bits scrambled by the RNTI added thereto.

The MAC layer performs data priority control and retransmission processing using Hybrid ARQ (HARQ), and the like. Data and control information are transmitted between the MAC layer of the UE 100 and the MAC layer of the node 200 through a transport channel. The MAC layer of the node 200 includes a scheduler. The scheduler determines the uplink and downlink transport format (transport block size, modulation, and coding scheme (MCS)) and the resources to be allocated to the UE 100.

The RLC layer transmits data to the RLC layer on the receiving side by using functions of the MAC layer and the PHY layer. Data and control information are transmitted between the RLC layer of the UE 100 and the RLC layer of the node 200 via a logical channel.

The PDCP layer performs header compression/decompression, encryption/decryption, and the like.

The SDAP layer performs mapping between an IP flow, which is a unit for QoS control by the CN 20, and a radio bearer, which is a unit for QoS control by an access stratum (AS). Note that, when the RAN is connected to the EPC, the SDAP need not be provided.

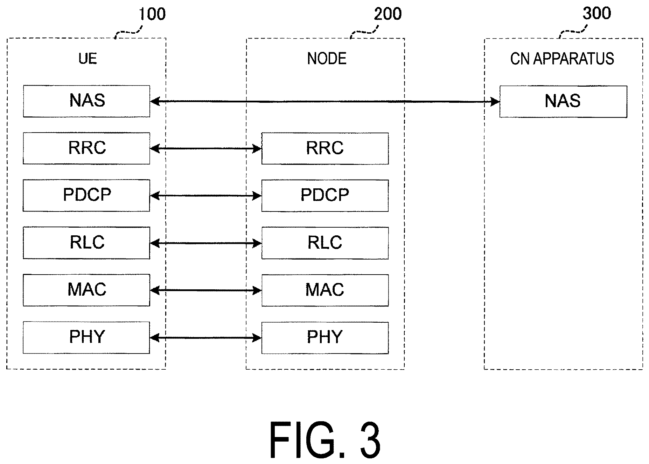

FIG. 3 is a diagram illustrating a configuration example of a protocol stack of a C-plane radio interface that handles signaling (control signals).

The protocol stack of the C-plane radio interface includes, for example, a radio resource control (RRC) layer and a non-access stratum (NAS) layer instead of the SDAP layer illustrated in FIG. 2.

RRC signaling for various settings is transmitted between the RRC layer of the UE 100 and the RRC layer of the node 200. The RRC layer controls a logical channel, a transport channel, and a physical channel according to establishment, re-establishment, and release of a radio bearer. When a connection (RRC connection) exists between the RRC of the UE 100 and the RRC of the node 200, the UE 100 is in an RRC connected state. When no connection (RRC connection) exists between the RRC of the UE 100 and the RRC of the node 200, the UE 100 is in an RRC idle state. When the connection between the RRC of the UE 100 and the RRC of the node 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of the CN apparatus 300. The UE 100 includes an application layer and the like other than the protocol of the radio interface. The layer below the NAS layer is referred to as an AS layer (also simply referred to as "AS").

### (1.2) DC Using Terahertz Wave Cell

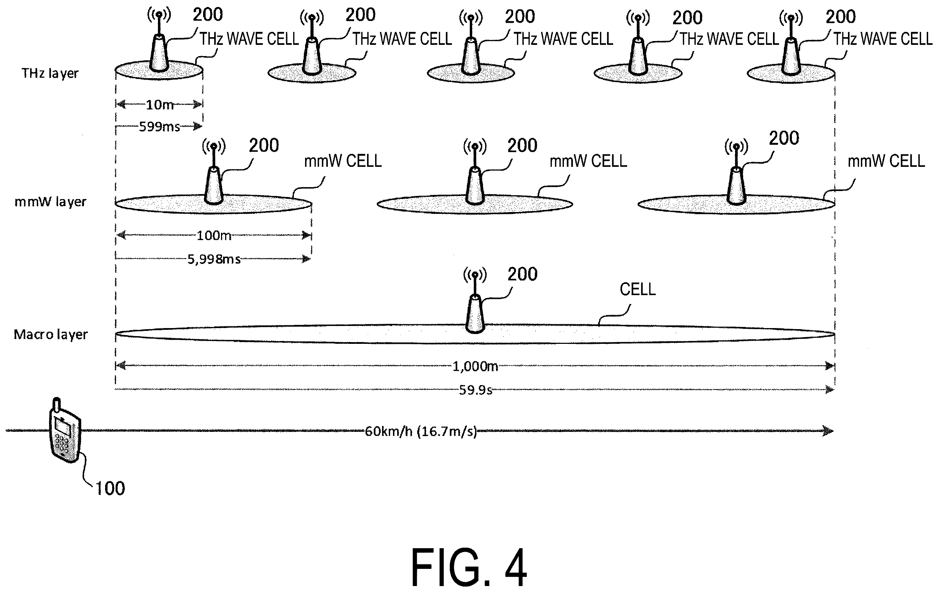

FIG. 4 is a diagram for describing a terahertz (THz) wave cell according to the embodiment.

The mobile communication system according to the embodiment may be a 6G system. 6G is assumed to utilize terahertz (THz) waves. A cell operated by using THz waves is referred to as a THz wave cell. Compared with millimeter waves (mmW), THz waves have a stronger tendency to propagate more directionally, have a higher free space loss, and are more susceptible to the effects of the atmosphere and precipitation. Therefore, the THz wave cell can be an extremely small cell.

In the illustrated example, the diameter of the coverage area of the THz wave cell is approximately 10 m, the diameter of the coverage area of the mmW cell operated at mmW is approximately 100 m, and the diameter of the coverage area of the macro cell is approximately 1000 m. Under such assumptions, for example, the UE 100 moving at 60 [km/s] passes through the coverage area of each THz wave cell in approximately 599 [ms].

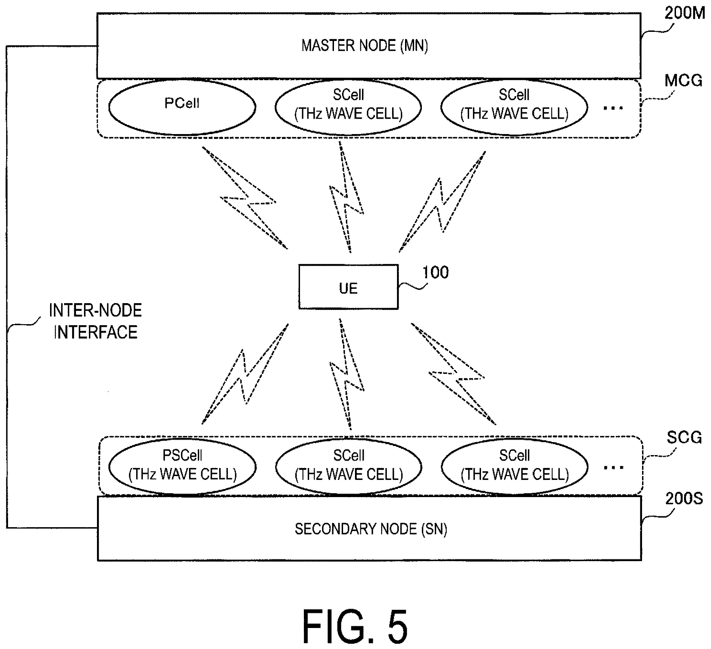

Dual connectivity (DC) is one method for stably controlling small cells in a mobile communication system. FIG. 5 is a diagram for describing dual connectivity (DC) according to the embodiment. In the embodiment, it is assumed that the THz wave cell is used as a cell of a secondary cell group (SCG). The THz wave cell may be used as a secondary cell (SCell) of a master cell group (MCG). However, instead of the THz wave cell, a mmW cell may be used.

DC may be configured in the UE 100 in the RRC connected state. In the DC, the UE 100 performs wireless communication with a master cell group (MCG) managed by a master node (MN) 200M and a secondary cell group (SCG) managed by a secondary node (SN). The MN 200M and the SN 200S are connected to each other via an inter-node interface. When not being distinguished, the MN 200M and the SN 200S are simply referred to as the node 200. When being a 5G/NR node, the MN 200M is also referred to as a master gNB (MgNB). When being a 5G/NR node, the SN 200M is also referred to as a secondary gNB (SgNB).

For example, the MN 200M transmits a predetermined message (for example, an SN Addition Request message) to the SN 200S, and the MN 200M transmits an RRC Reconfiguration message to the UE 100, so that an SCG is configured in the UE 100 and DC is started. In DC, a radio resource is allocated to the UE 100 in the RRC connected state from the scheduler of each of the MN 200M and the SN 200S, and the UE 100 performs wireless communication by using the radio resource of the MN 200M and the radio resource of the SN 200S.

The MN 200M may have a control plane connection with the CN 20. The MN 200M provides a main radio resource for the UE 100. The MN 200M manages an MCG, which is a group of serving cells associated with the MN 200M. An MCG has a primary cell (PCell) and optionally one or more secondary cells (SCells). On the other hand, the SN 200S need not have a control plane connection with the CN 20. The SN 200S provides an additional radio resource to the UE 100. The SN 200S manages an SCG, which is a group of serving cells associated with the SN 200S. An SCG has a primary secondary cell (PSCell) and optionally one or more SCells. Note that the PCell of the MCG and the PSCell of the SCG are sometimes referred to as special cells (SpCells).

The mobile communication system supports activation and deactivation of the SCG to enable reduction of power consumption of the UE 100 in which DC is configured. Activation/deactivation of the SCG can be indicated by using an RRC Reconfiguration message from the MN 200M to the UE 100. While the SCG is deactivated, all SCG SCells are in the inactive state. While the SCG is deactivated, the UE 100 does not need to transmit a physical uplink shared channel (PUSCH), a sounding reference signal (SRS), and a channel state indicator (CSI) report on the SCG. While the SCG is deactivated, the UE 100 does not need to monitor a physical downlink shared channel (PDCCH) or receive a downlink shared channel (DL-SCH) on the SCG. However, the UE 100 can continue radio link monitoring (RLM) and measurement reporting for the PSCell. When activating the SCG, the UE 100 can skip a random access procedure if timing advance (TA) with the PSCell is valid.

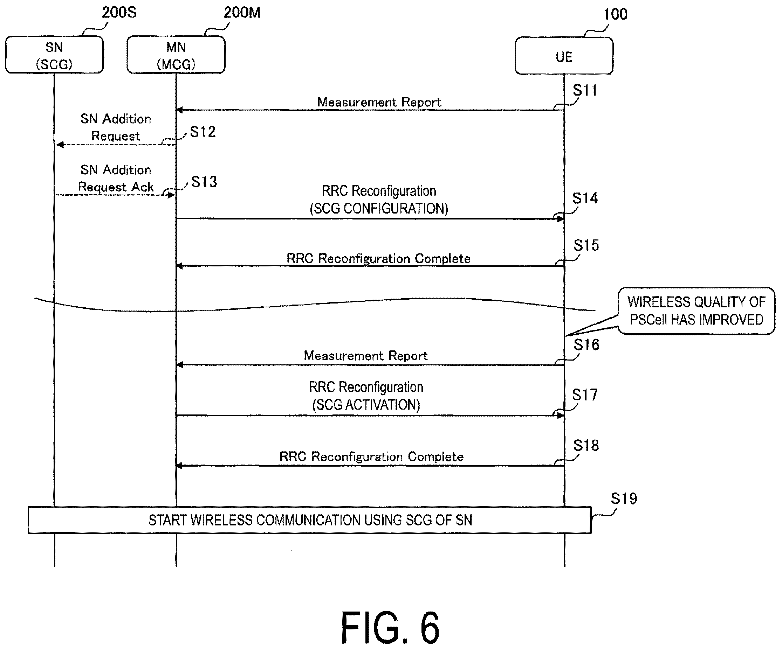

FIG. 6 is a diagram illustrating a general procedure for configuring and activating an SCG.

In step S11, the UE 100 transmits a Measurement Report message including the measurement result of the wireless quality of each cell to the MN 200M. The wireless quality may be an indicator related to wireless quality, and is, for example, at least one selected from the group consisting of reference signal received power (RSRP), reference signal received quality (RSRQ), and signal to interference & noise ratio (SINR). The Measurement Report message is an RRC message transmitted and received in the RRC layer. The Measurement Report message may be transmitted periodically or in response to an event trigger. The MN 200M receives the Measurement Report message. The MN 200M determines, based on the Measurement Report message, to configure an SCG in the UE 100.

In step S12, the MN 200M may transmit an S-Node (SN) Addition Request message to the SN 200S to request preparation of resources for DC operation for the UE 100.

In step S13, in response to receiving the SN Addition Request message, the SN 200S may transmit an S-Node (SN) Addition Request Acknowledge (Ack) message to the MN 200M to acknowledge the preparation of resources for DC operation for the UE 100.

In step S14, the MN 200M transmits an RRC Reconfiguration message to the UE 100 to configure an SCG in the UE 100. The RRC Reconfiguration message is an RRC message transmitted and received in the RRC layer. The UE 100 receives the RRC Reconfiguration message. Here, it is assumed that the initial state of the SCG is the inactive state.

In step S15, the UE 100 transmits an RRC Reconfiguration Complete message indicating that the configuration (addition) of the SCG based on the RRC Reconfiguration message has been completed to the MN 200M. The RRC Reconfiguration Complete message is an RRC message transmitted and received in the RRC layer. The MN 200M receives the RRC Reconfiguration Complete message.

Thereafter, it is assumed that the wireless quality of the SCG (PSCell) improves in the UE 100, and the wireless quality of the SCG (PSCell) becomes capable of communication.

In step S16, the UE 100 transmits a Measurement Report message including the measurement result of the wireless quality of the PSCell to the MN 200M. The UE 100 may transmit, to the MN 200M, a Measurement Report message with the better wireless quality of the PSCell as a trigger. The MN 200M receives the Measurement Report message.

In step S17, the MN 200M transmits an RRC Reconfiguration message for activating the SCG to the UE 100. The UE 100 receives the RRC Reconfiguration message and starts activation of the SCG. The activation processing of the SCG includes communication preparation such as channel state information (CSI) measurement, automatic gain control (AGC), and beam management.

In step S18, the UE 100 transmits the RRC Reconfiguration Complete message to the MN 200M. The MN 200M receives the RRC Reconfiguration Complete message.

In step S19, the UE 100 starts wireless communication (data communication) with the SN 200S by using the activated SCG.

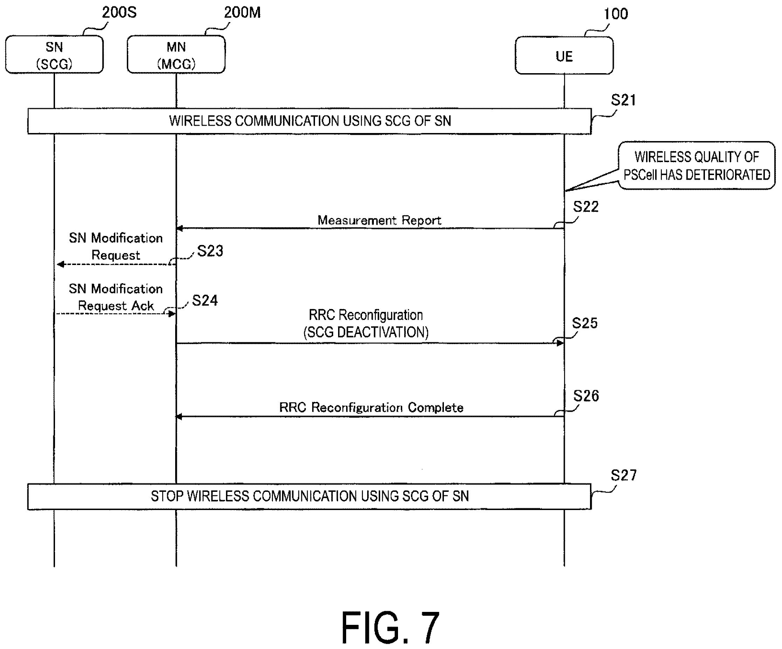

FIG. 7 is a diagram illustrating a general procedure for deactivating an SCG.

In step S21, an SCG configured in the UE 100 is in the active state, and the UE 100, the MN 200M, and the SN 200S are performing DC communication. The UE 100 performs wireless communication (data communication) with the SN 200S by using the activated SCG.

It is assumed that the wireless quality of the SCG (PSCell) deteriorates in the UE 100, resulting in difficulties in maintaining the wireless communication using the SCG (PSCell).

In step S22, the UE 100 transmits a Measurement Report message including the measurement result of the wireless quality of each cell to the MN 200M, for example, on an MCG. The MN 200M receives the Measurement Report message. The node 200 detects, based on the Measurement Report message, the deterioration in wireless quality of the SCG (PSCell) in the UE 100.

In step S23, the MN 200M may transmit, to the SN 200S, an SN Modification Request message for requesting deactivation of the SCG configured in the UE 100.

In step S24, in response to receiving the SN Modification Request message, the SN 200S may transmit, to the MN 200M, an SN Modification Request Ack message for acknowledging the deactivation of the SCG configured in the UE 100.

In step S25, the MN 200M transmits, to the UE 100, an RRC Reconfiguration message for the deactivation of the SCG configured in the UE 100. The UE 100 receives the RRC Reconfiguration message.

In step S26, the UE 100 transmits an RRC Reconfiguration Complete message to the MN 200M. The MN 200M receives the RRC Reconfiguration Complete message.

In step S27, in response to the reception of the RRC Reconfiguration message in step S25, the UE 100 deactivates the SCG. For example, the UE 100 stops PDCCH monitoring for the SCG (PSCell). On the other hand, the MN 200M stops DL transmission processing (PDCCH transmission or PDSCH transmission) on the SCG. As a result, the wireless communication using the SCG is stopped.

In the operation illustrated in FIG. 7, communication on the SCG becomes impossible when the wireless quality of the SCG in the UE 100 deteriorates. However, the MN 200M cannot detect the deterioration in wireless quality of the SCG until receiving the Measurement Report message in step S22. Thus, the SN 200S can continue the DL transmission processing on the SCG even after the SCG wireless quality deteriorates. The UE 100 can continue the PDCCH monitoring and the like on the SCG until receiving the RRC Reconfiguration message in step S25. Such an operation may cause a waste of resources and power consumption.

For example, the delay from when the wireless quality of the SCG (PSCell) in the UE 100 deteriorates to when the Measurement Report message is transmitted may be approximately 10 ms, and the delay from when the MN 200M receives the Measurement Report message to when the RRC Reconfiguration message is transmitted to the UE 100 may be approximately 10 ms. In this case, resources and power consumption may be wasted in about 20 ms. Thus, once the wireless quality of the SCG (PSCell) fails to meet a predetermined quality, the SCG is preferably immediately deactivated.

### (1.3) Configuration Example of User Equipment

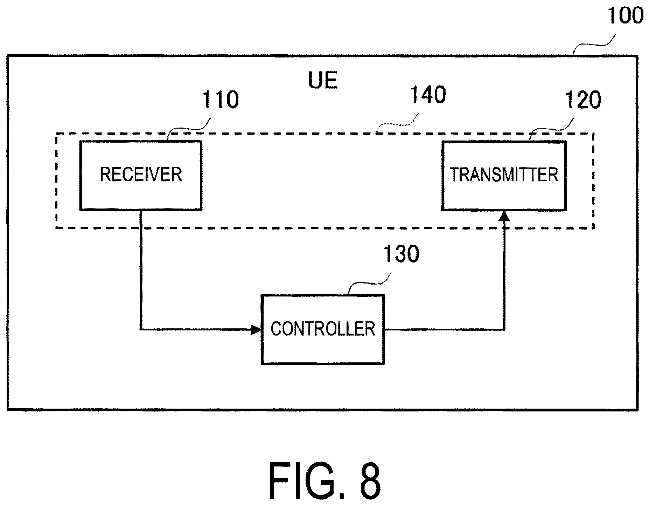

FIG. 8 is a diagram illustrating a configuration example of the UE 100 (user equipment) according to the embodiment.

The UE 100 includes a receiver 110, a transmitter 120, and a controller 130. The receiver 110 and the transmitter 120 constitute a wireless communicator 140 that performs wireless communication with the node 200.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130. The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

The UE 100 configured in this manner performs wireless communication with the MN 200M and the SN 200S by using DC. The receiver 110 receives, from the MN 200M, information indicating a wireless quality condition to be met for the UE 100 to perform deactivation processing for the SCG of the SN 200S. The controller 130 measures the wireless quality of the SCG (PSCell) and evaluates whether the wireless quality condition is met. Then, the controller 130 performs deactivation processing for the SCG in response to the wireless quality condition being met. In the first embodiment, the deactivation processing includes processing of causing an SCG in an active state to transition to an inactive state.

Thus, when the wireless quality of the SCG (PSCell) meets the wireless quality condition (for example, when the wireless quality deteriorates below predetermined quality), the UE 100 can autonomously perform the deactivation processing on the SCG. Thus, the deactivation of the SCG can be increased in speed.

The deactivation processing may include processing of causing a bandwidth portion (BWP) being in a non-dormant state to transition to a dormant state in the PSCell that is a primary cell of the SCG. An example in which the dormant BWP is used will be described in a second embodiment.

In the embodiment, the transmitter 120 transmits a notification regarding the deactivation processing to the node 200 in response to the wireless quality condition being met. This allows the node 200 to detect, based on the notification, that the UE 100 performs the deactivation processing. Therefore, wireless communication using the activated SCG can be smoothly started. The notification may be a newly introduced MAC CE. Since the MAC CE is transmitted and received in the MAC layer, faster transmission processing can be performed compared to the Measurement Report message.

In the embodiment, the transmitter 120 transmits the notification regarding the deactivation processing to the MN 200M on the MCG. Accordingly, even when the wireless quality of the MCG deteriorates, the notification can be transmitted to the network 5. Thus, the wireless communication using the SCG can be stopped smoothly and promptly.

In the embodiment, the controller 130 stops the PDCCH monitoring and the like for the SCG when the wireless quality condition is met or when an acknowledgment (HARQ ACK) of the notification regarding the deactivation processing is received from the MN 200M. This can suppress the above-described waste of resources and power consumption.

### (1.4) Configuration Example of Node

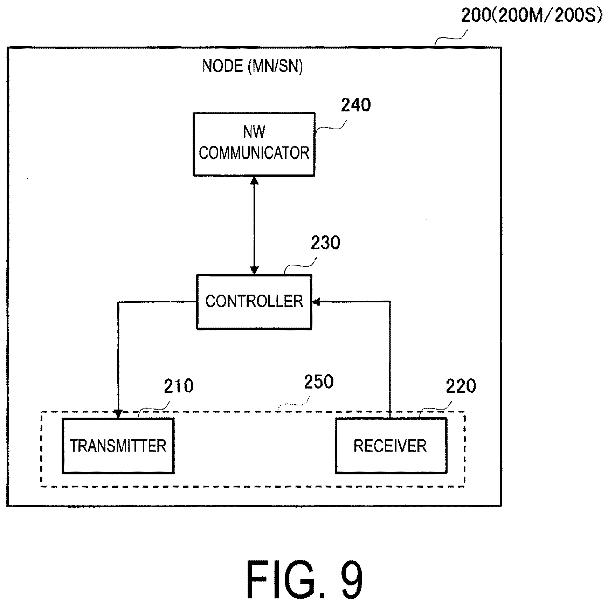

FIG. 9 is a diagram illustrating a configuration example of the node 200 (base station) according to the embodiment. The node 200 may be the MN 200M or the SN 200S.

The node 200 includes a transmitter 210, a receiver 220, a controller 230, and an NW communicator 240. The transmitter 210 and the receiver 220 constitute a wireless communicator 250 that performs wireless communication with the UE 100.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna. The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various controls and processes in the node 200. The operations of the node 200 described above and below may be operations under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The NW communicator 240 is connected to adjacent nodes via an inter-node interface. The NW communicator 240 is connected to the CN apparatus 300 via a node-CN interface.

The node 200 configured in this manner operates as the MN 200M in a mobile communication system in which the UE 100 performs wireless communication with the MN 200M and the SN 200S by using DC. The controller 230 configures the SCG of the SN 200S in the UE 100. The transmitter 210 transmits, to the UE 100, information indicating a wireless quality condition required for the UE 100 when deactivation processing is performed for the SCG. Thus, when the wireless quality of the SCG meets the wireless quality condition, the UE 100 can autonomously perform the deactivation processing on the SCG.

In the embodiment, the receiver 220 receives a notification regarding the deactivation processing from the UE 100 in response to the wireless quality condition being met in the UE 100. This allows the node 200 (MN 200M) to detect, based on the notification, that the UE 100 performs the deactivation processing.

In the embodiment, the controller 230 stops the DL transmission processing (PDCCH transmission or PDSCH transmission) on the SCG when receiving the notification regarding the deactivation processing or when transmitting an acknowledgment (HARQ ACK) of the notification to the UE 100. By this means, compared to the general procedure illustrated in FIG. 7, the DL transmission processing can be stopped earlier, resulting in suppression of the above-described waste of resources and power consumption.

### (1.5) Operation Example of System

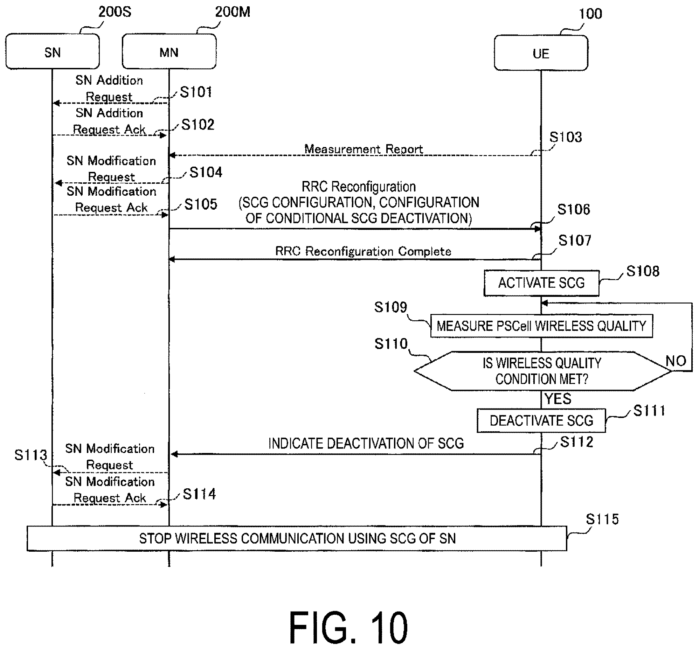

FIG. 10 is a diagram illustrating an operation example of a system according to the first embodiment. In FIG. 10, non-essential steps are indicated by dashed lines. Duplicated descriptions of operations the same as and/or similar to those in FIG. 6 will be omitted.

In step S101, the MN 200M may transmit an SN Addition Request message to the SN 200S to request preparation of resources for DC operation for the UE 100.

In step S102, in response to receiving the SN Addition Request message, the SN 200S may transmit an SN Addition Request Ack message to the MN 200M to acknowledge the preparation of resources for DC operation for the UE 100.

In step S103, the UE 100 may receive a reference signal from each cell, measure, based on the reference signal, the wireless quality, and transmit a Measurement Report message including the measurement result to the MN 200M. Here, it is assumed that the Measurement Report message includes the measurement result of the THz wave cell. The receiver 220 of the MN 200M receives the Measurement Report message.

In step S104, the MN 200M may transmit, to the SN 200S, a message (for example, an SN Modification Request message) for requesting activation of the SCG and configuring conditional SCG deactivation in the UE 100. The SN 200S receives the message. The message may include an identifier of the UE 100, specifically, an identifier for identifying the UE 100 on the inter-node interface. The message may include information notifying of conditional SCG deactivation or information requesting configuration of conditional SCG deactivation. When the SN 200S requests configuration of conditional SCG deactivation, the message may include configuration information for conditional SCG deactivation.

In step S105, the SN 200S may transmit a message indicating an acknowledgement of the message of step S104 (for example, an SN Modification Request Ack message) to the MN 200M. The MN 200M receives the message. The message may include information about resources (for example, SCG and bearers) prepared by the SN 200S, for example, information about the PSCell and information about the SCell of the SCG. The message may include configuration information regarding a reference signal of the SCG (PSCell). This information may be transmitted from the MN 200M to the UE 100 in step S106.

In step S106, the MN 200M generates an RRC Reconfiguration message and transmits the RRC Reconfiguration message to the UE 100. The UE 100 receives the RRC Reconfiguration message.

The RRC Reconfiguration message includes information for configuring the SCG and configuration information for conditional SCG deactivation. The information for configuring the SCG includes information about the PSCell and information about the SCell of the SCG. Note that, in the illustrated example, the information for configuring the SCG and the configuration information for the conditional SCG deactivation are transmitted by using one RRC Reconfiguration message, but these pieces of information may be transmitted by using different RRC Reconfiguration messages. The configuration information for the conditional SCG deactivation may include information for configuring a frequency and/or a cell ID (cell index) of the PSCell.

The configuration information for the conditional SCG deactivation includes information indicating a wireless quality condition to be met when the UE 100 activates the corresponding SCG.

The information indicating the wireless quality condition may include at least one wireless quality threshold value selected from the group consisting of an RSRP threshold value, an RSRQ threshold value, and an SINR threshold value. Meeting the wireless quality condition for the SCG (PSCell) may mean at least one selected from the group consisting of the RSRP of the SCG (PSCell) being lower than the RSRP threshold value, the RSRQ of the SCG (PSCell) being lower than the RSRQ threshold value, and the SINR of the SCG (PSCell) being lower than the SINR threshold value.

The information indicating the wireless quality condition may include a threshold value of a duration during which a radio problem is being detected in a lower layer (for example, a PHY layer) in the UE 100. In this case, meeting the wireless quality condition for the SCG (PSCell) may mean that a duration during which a radio problem is being detected for the SCG (PSCell) has reached a threshold value.

The information indicating the wireless quality condition may include a threshold value of the number of times that retransmission continues in the UE 100 (that is, the number of times that UL data transmission continues to fail). In this case, meeting the wireless quality condition for the SCG (PSCell) may mean that the number of times that retransmission continues for the SCG (PSCell) (that is, the number of times that UL data transmission continues to fail for the SCG (PSCell)) has reached the threshold value.

The information indicating the wireless quality condition may include a threshold value of a time period during which UL data transmission cannot be performed based on detection of an interference wave in the UE 100. For example, in the operation of the SCG (PSCell) in the unlicensed band, the UE 100 performs carrier sensing on the SCG (PSCell), and performs UL-data transmission only when a vacant channel exists, and does not perform UL data transmission when no vacant channel exists. In this case, meeting the wireless quality condition for the SCG (PSCell) may mean that a time period during which the UL data transmission using the carrier sensing cannot be performed have reached the threshold value.

In step S107, the UE 100 generates an RRC Reconfiguration Complete message and transmits the RRC Reconfiguration Complete message to the MN 200M. The MN 200M receives the RRC Reconfiguration Complete message.

The initial state of the SCG configured in the UE 100 is an active state (step S108). The UE 100 starts, based on the configuration information for the conditional SCG deactivation, wireless quality measurement for the SCG (specifically, the PSCell).

In step S109, the UE 100 receives a reference signal of the PSCell and measures, based on the reference signal, the wireless quality of the PSCell. The reference signal of the PSCell may be a demodulation reference signal (DMRS) included in an SSB (SS/PBCH Block) transmitted by the PSCell or may be a tracking reference signal (TRS), which is a type of CSI-RS. The measurement of the wireless quality may include at least one of measurement of a duration time during which a radio problem is being detected, measurement of the number of times retransmission continues (that is, the number of times UL data transmission continues to fail), and measurement of a time period during which UL data transmission cannot be performed.

In step S110, the UE 100 determines whether the wireless quality condition set in step S106 is met. Specifically, the UE 100 compares the measurement result (RSRP, RSRQ, and/or SINR) of step S109 with the threshold value of the wireless quality set in step S106, and if the measurement result decreases below the threshold value of the wireless quality, determines that the wireless quality condition is met. When the UE 100 determines that the wireless quality condition is not met (step S110: NO), processing returns to step S109.

Otherwise, When the UE 100 determines that the wireless quality condition is met (step S110: YES), in step S111, the UE 100 deactivates the SCG. For example, the controller 130 in the UE 100 stops the processing such as the PDCCH monitoring for the SCG. Note that the SCG deactivation may be performed when an acknowledgment (HARQ ACK) of the notification in step S112 is received.

In step S112, the UE 100 triggers transmission of an SCG deactivation notification and transmits the SCG deactivation notification to the MN 200M. The SCG deactivation notification may be a newly introduced MAC CE. Alternatively, the SCG deactivation notification may be a notification included in UCI transmitted on the PUCCH, may be a PDCP Control PDU, or may be a notification included in an RRC message. The MN 200M receives the SCG deactivation notification. In response to receiving the SCG deactivation notification, the MN 200M detects that the SCG of the UE 100 has become unavailable. The SCG deactivation notification may include an index (which may be a cell ID) of each cell of the deactivated SCG. The index may refer to each entry of the cell list of the SCG configured in the RRC Reconfiguration message in step S106.

The SCG deactivation notification may include information regarding a timing at which the SCG deactivation (that is, step S108) is performed. The timing information may be a wireless frame number for which the SCG deactivation is performed, and may be expressed by using any one of a system frame number, a subframe number, a slot number, and a symbol number, or a combination thereof. The timing information may be information regarding a time at which the SCG deactivation is performed. The timing information may be an elapsed time from when the SCG deactivation is performed to when the SCG deactivation notification is transmitted, may be expressed in seconds (for example, milliseconds), or may be expressed in the number of wireless frames (for example, the number of slots). With such timing information, the node 200 can detect the timing at which the DL reception in the SCG has stopped, and can efficiently specify a data packet to be retransmitted when data for which DL transmission is performed during the period is retransmitted on the MCG.

Prior to transmitting the SCG deactivation notification, the following processing may be performed in the PHY layer and the MAC layer. Specifically, the UE 100 transmits a Scheduling Request (SR) to the MN 200M, the MN 200M transmits a UL grant for a Buffer Status Report (BSR) to the UE 100, the UE 100 transmits a BSR to the MN 200M, and the MN 200M transmits a UL grant for transmitting a PUSCH to the UE 100. Then, the UE 100 transmits, based on the UL grant for the PUSCH transmission, the SCG deactivation notification.

In step S113, the MN 200M may transmit, to the SN 200S, a message (for example, an SN Modification Request message) for notifying that the UE 100 has deactivated the SCG. The SN 200S receives the message. The message may include an identifier of the UE 100, specifically, an identifier for identifying the UE 100 on the inter-node interface.

In step S114, the SN 200S may transmit a message indicating an acknowledgement of the message of step S113 (for example, an SN Modification Request Ack message) to the MN 200M. The MN 200M receives the message.

In step S115, the SN 200S stops the DL transmission using the SCG to the UE 100.

Note that, in this operation example, although an example has been described in which the UE 100 transmits the SCG deactivation notification to the MN 200M, the SCG deactivation notification may be transmitted to the SN 200S on the SCG (for example, PSCell) before deactivating the SCG.

In this operation example, the MN 200M transmits, to the SN 200S, a message for configuring conditional SCG deactivation to the UE 100, and the SN 200S transmits a response message to the message. Alternatively, the SN 200S may autonomously transmit, to the MN 200M, a message for configuring conditional SCG deactivation to the UE 100. In this case, the message may include information notifying of conditional SCG deactivation or information for requesting configuration of conditional SCG deactivation. When the SN 200S requests configuration of conditional SCG deactivation, the message may include configuration information for conditional SCG deactivation.

### (2) Second Embodiment

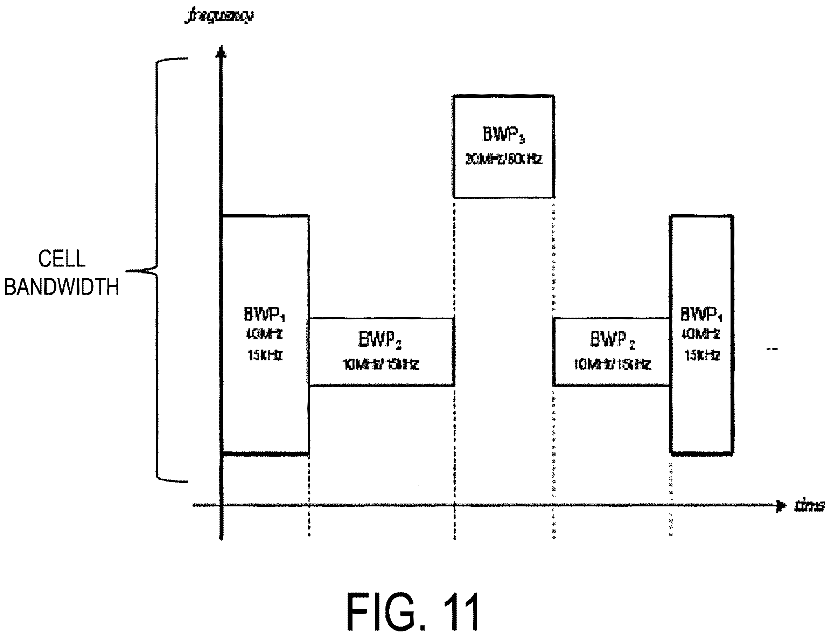

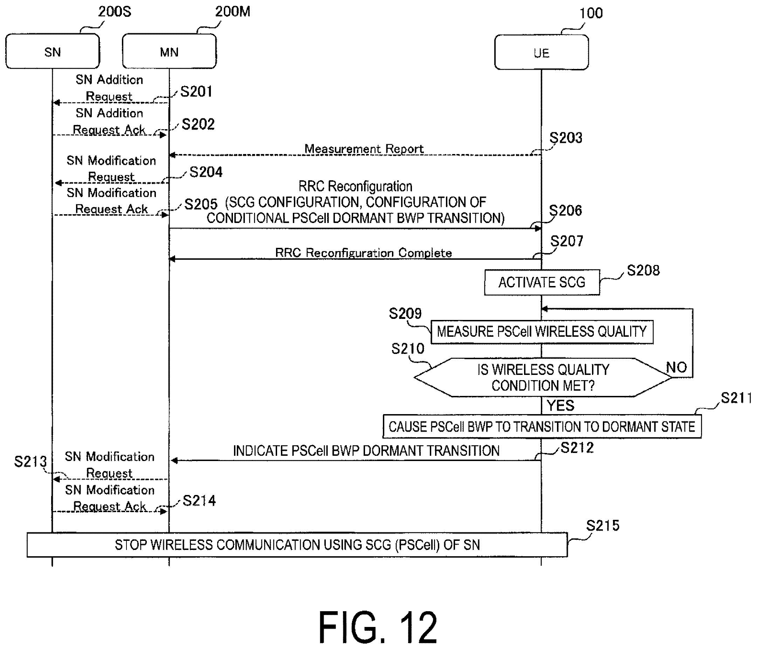

A second embodiment will be described with reference to FIG. 11 and FIG. 12, by focusing mainly on differences from the first embodiment.

### (2.1) BWP

FIG. 11 is a diagram for describing a BWP.

Bandwidth adaptation (BA) allows the transmission and reception bandwidth of the UE 100 to be adjusted without needing to be as large as the bandwidth of the cell. A part of the cell bandwidth, which may be referred to as a "system bandwidth" or a "carrier bandwidth", is referred to as a BWP. In BA, the node 200 configures one or more BWPs within the cell in the UE 100 and notifies the UE 100 which of the configured BWPs is currently active. The BWP includes an initial BWP to be used for initial access and a dedicated BWP to be individually configured in the UE 100. The bandwidth and subcarrier spacing of each BWP can be variably set.

In the illustrated example, three different BWPs are configured in the UE 100, and an example is illustrated in which the active BWP is switched between these BWPs. BWP₁ has a width of 40 MHz and a subcarrier spacing of 15 kHz, BWP₂ has a width of 10 MHz and a subcarrier spacing of 15 kHz, and BWP₃ has a width of 20 MHz and a subcarrier spacing of 60 kHz.

In each of the UL and DL, only one BWP is in the active state, and the rest are in the inactive state. In an inactive BWP, the UE 100 does not monitor the PDCCH and does not transmit the PUCCH, the PRACH, and the UL-SCH (PUSCH).

In the current 3GPP technical specification, in the case of carrier aggregation (CA), the node 200 can configure a BWP in a dormant state (dormant BWP) for the SCell. When the active BWP of the activated SCell is a BWP in a dormant state, the UE 100 stops PDCCH monitoring and SRS/PUSCH/PUCCH transmission in the SCell, but continues to perform CSI measurement, AGC, and beam management. PDCCH/DCI is used to control entering and leaving the dormant BWP for the SCell. Note that the dormant BWP is one of the dedicated BWPs of the UE 100 that is configured by the node 200 through dedicated RRC signaling.

In the second embodiment, a case is assumed in which the dormant BWP can be set in the PSCell.

### (2.2) Operation Example of System

The UE 100 according to the second embodiment performs wireless communication with the MN 200M and the SN 200S by using DC, similarly to the first embodiment. In the second embodiment, the deactivation processing for the SCG includes dormant leaving processing that switches a BWP in a dormant state in a PSCell to a non-dormant state. Specifically, according to the second embodiment, the UE 100 leaves the dormant state for the BWP in the dormant state in the PSCell in the active state in response to the wireless quality condition configured by the MN 200M being met.

FIG. 12 is a diagram illustrating an operation example of a system according to the second embodiment. In FIG. 12, non-essential steps are indicated by dashed lines. Duplicated descriptions of operations the same as and/or similar to those in the first embodiment described above will be omitted.

The operations from step S201 to step S205 are similar to those in the first embodiment.

In step S206, the MN 200M transmits an RRC Reconfiguration message to the UE 100. The UE 100 receives the RRC Reconfiguration message. In the second embodiment, the RRC Reconfiguration message includes information for configuring an SCG, and configuration information for transitioning to a conditional dormant BWP. The configuration information for transition to the conditional dormant BWP includes information indicating a wireless quality condition to be met for causing an active BWP of a corresponding PSCell in the active state to transition to the dormant state. The information indicating the wireless quality condition is the same as or similar to that of the first embodiment, but may include, for example, at least one wireless quality threshold value selected from the group consisting of an RSRP threshold value, an RSRQ threshold value, and an SINR threshold value.

In the second embodiment, the initial state of the active BWP of the PSCell configured in the UE 100 is the non-dormant state. The UE 100 starts, based on configuration information for the transition to the conditional dormant BWP, measuring the wireless quality for the PSCell. When the active BWP of the PSCell is the non-dormant BWP, the UE 100 causes the non-dormant BWP of the PSCell to transition to the dormant state when the wireless quality condition is met for the PSCell. In step S207, the UE 100 transmits the RRC Reconfiguration Complete message to the MN 200M. The MN 200M receives the RRC Reconfiguration Complete message.

The initial state of the SCG configured in the UE 100 in step S206 is the active state (step S208).

In step S209, the UE 100 receives a reference signal of the PSCell and measures, based on the reference signal, the wireless quality of the PSCell. The measurement of the wireless quality may include at least one of measurement of a duration time during which a radio problem is being detected, measurement of the number of times retransmission continues (that is, the number of times UL data transmission continues to fail), and measurement of a time period during which UL data transmission cannot be performed.

In step S210, the UE 100 determines whether the wireless quality condition set in step S206 is met. Specifically, the UE 100 compares the measurement result (RSRP, RSRQ, and/or SINR) of step S209 with the threshold value of the wireless quality set in step S206, and when the measurement result exceeds the threshold value of the wireless quality, determines that the wireless quality condition is met. When the UE 100 determines that the wireless quality condition is not met (step S210: NO), processing returns to step S209.

Otherwise, when the UE 100 determines that the wireless quality condition is met (step S210: YES), in step S211, the UE 100 causes the active BWP of the PSCell to transition to the dormant state (that is, switches from the non-dormant state to the dormant state).

In step S212, the UE 100 triggers transmission of a PSCell BWP dormant transition notification and transmits the PSCell BWP dormant transition notification to the MN 200M. The MN 200M receives the PSCell BWP dormant transition notification. The PSCell BWP dormant transition notification may be a newly introduced MAC CE. Alternatively, the PSCell BWP dormant transition notification may be a notification included in UCI transmitted on the PUCCH, may be a PDCP Control PDU, or may be a notification included in an RRC message.

The PSCell BWP dormant transition notification may include information of a timing at which the PSCell BWP dormant transition (that is, step S211) is performed. The timing information may be a wireless frame number in which the PSCell BWP dormant transition is performed, and may be expressed by any one of a system frame number, a subframe number, a slot number, and a symbol number, or a combination thereof. The timing information may be time information at which the PSCell BWP dormant transition is performed. The timing information may be an elapsed time from when the PSCell BWP dormant transition is performed to when the PSCell BWP dormant transition notification is transmitted, may be expressed in seconds (for example, milliseconds), or may be expressed in the number of wireless frames (for example, the number of slots). With such timing information, the MN 200M can detect when the DL reception in the SCG (PSCell) is stopped, and can efficiently specify a data packet to be retransmitted when data for which DL transmission is performed during the period is retransmitted on the MCG.

Prior to transmitting the PSCell BWP dormant transition notification, the following processing may be performed in the PHY layer and the MAC layer. Specifically, the UE 100 transmits an SR to the MN 200M, the MN 200M transmits a UL grant for a BSR to the UE 100, the UE 100 transmits a BSR to the MN 200M, and the MN 200M transmits a UL grant for transmitting a PUSCH to the UE 100. Then, the UE 100 transmits, based on the UL grant for the PUSCH transmission, a PSCell BWP dormant transition notification.

In step S213, the MN 200M may transmit, to the SN 200S, a message (for example, an SN Modification Request message) for notifying that the UE 100 has transitioned to the dormant state for the active BWP of the PSCell. The SN 200S receives the message. The message may include an identifier of the UE 100, specifically, an identifier for identifying the UE 100 on the inter-node interface.

In step S214, the SN 200S may transmit a message indicating an acknowledgement of the message of step S213 (for example, an SN Modification Request Ack message) to the MN 200M. The MN 200M receives the message.

In step S215, the SN 200S stops the DL transmission using the SCG to the UE 100.

Note that, in this operation example, an example has been described in which the UE 100 transmits the PSCell BWP dormant transition notification to the MN 200M, but the PSCell BWP dormant transition notification may be transmitted to the SN 200S on the PSCell before causing the active BWP of the PSCell to transition to the dormant state.

### (3) Third Embodiment

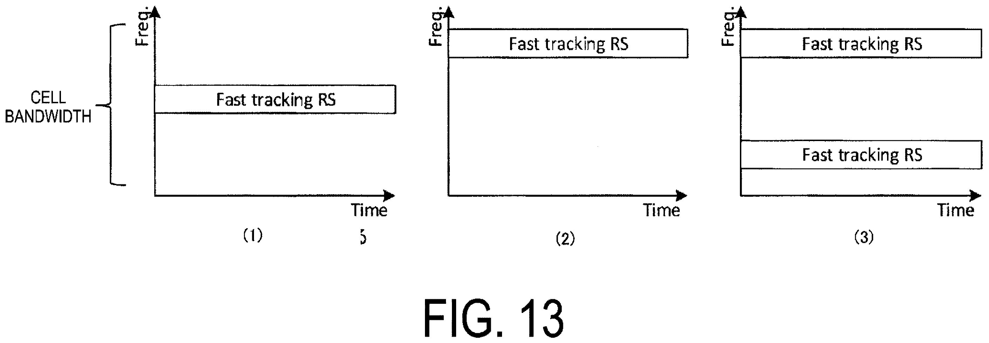

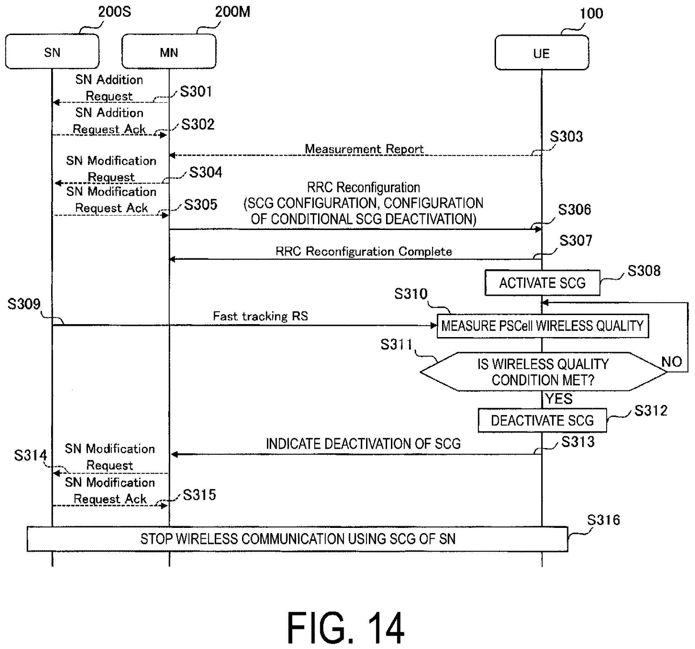

A third embodiment will be described with reference to FIG. 13 and FIG. 14, by focusing mainly on differences from the above-described embodiments. The third embodiment is an embodiment based on the above-described first embodiment. However, the third embodiment may be an embodiment based on the above-described second embodiment.

In the above-described embodiments, the UE 100 detects that the wireless quality of the PSCell meets a predetermined quality and performs SCG deactivation or dormant BWP transition. Here, in order to quickly detect that the wireless quality of the PSCell has met a predetermined quality, the UE 100 is preferably capable of constantly measuring the wireless quality of the PSCell. In the above-described embodiments, the UE 100 measures the wireless quality (RSRP or the like) using the SSB or TRS (CSI-RS) as a reference signal, but these reference signals are transmitted discretely in time. Thus, at the timing when SSB or CSI-RS is not being transmitted, the UE 100 cannot measure wireless communication, and a delay may occur in detecting that the wireless quality of PSCell meets a predetermined quality.

Thus, in the third embodiment, the SN 200S transmits, on the PSCell, a reference signal (also referred to as "Fast tracking RS") continuously in time. The reference signal is used for measuring wireless quality. The SN 200S may transmit, based on a request and/or settings from the MN 200M, the Fast tracking RS. The UE 100 receives the Fast tracking RS transmitted continuously in time on the PSCell. The UE 100 measures, based on the Fast tracking RS, the wireless quality of the PSCell.

FIG. 13 is a diagram illustrating a specific example of a Fast tracking RS according to the third embodiment. The Fast tracking RS according to the third embodiment is allocated to one or some frequency resources of the bandwidth of the PSCell.

In the example of (1) in FIG. 13, the Fast tracking RS is allocated to one or more resource blocks in the center of the bandwidth of the PSCell, or on one or more subcarriers in the center portion of the bandwidth of the PSCell. In the example of (2) in FIG. 13, the Fast tracking RS is allocated to one or more resource blocks on one end side of the bandwidth of the PSCell, or in one or more subcarriers on one end side of the bandwidth of the PSCell. In the example of (3) in FIG. 13, the Fast tracking RS is allocated to one or more resource blocks on both ends of the bandwidth of the PSCell, or in one or more subcarriers on both ends of the bandwidth of the PSCell.

FIG. 14 is a diagram illustrating an operation example of a system according to the third embodiment. In FIG. 14, non-essential steps are indicated by dashed lines. Duplicated descriptions of operations the same as and/or similar to those in the first embodiment described above will be omitted.

The operations from step S301 to step S308 are the same as and/or similar to those in the first embodiment.

Specifically, in step S306, the MN 200M transmits an RRC Reconfiguration message to the UE 100. The UE 100 receives the RRC Reconfiguration message.

In the third embodiment, the RRC Reconfiguration message may include configuration information regarding the Fast tracking RS in addition to the information described in the above first embodiment. The configuration information regarding the Fast tracking RS includes at least one selected from the group consisting of information indicating the presence or absence of the Fast tracking RS, information indicating the position of the Fast tracking RS on the frequency axis (for example, a resource block number, a subcarrier number, and/or an Absolute Radio-Frequency Channel Number (ARFCN)), and information for assisting in demodulating the Fast tracking RS (for example, a root sequence number indicating a signal sequence of a reference signal, and the like).

Alternatively, the SN 200S or the MN 200M may broadcast configuration information regarding the Fast tracking RS in a system information block (SIB).

Then, in step S309, the SN 200S transmits the Fast tracking RS that is periodic on the time axis in the PSCell that is a target of high-speed detection. The UE 100 receives the Fast tracking RS on the PSCell.

In step S310, the UE 100 measures, based on the Fast tracking RS, the wireless quality of the PSCell.

In step S311, the UE 100 determines whether the wireless quality condition set in step S306 is met. When the UE 100 determines that the wireless quality condition is not met (step S311: NO), processing returns to step S310.

When the UE 100 determines that the wireless quality condition is met (step S311: YES) in step S312, the UE 100 deactivates the SCG.

The operations from step S313 to step S316 are the same as and/or similar to those in the above first embodiment.

### (4) Other Embodiments

The above-described first to third embodiments may be implemented individually and independently, or two or more of the embodiments may be combined and implemented.

In the above embodiments, an example in which the cells of the SCG are THz wave cells has been mainly described, but the cells of the SCG are not limited to THz wave cells. For example, the cells of the SCG may be mmW cells.

The UE 100 may be a mobile termination (MT) of an integrated access and backhaul (IAB) node. In this case, the IAB MT (UE 100) may be connected to a first node, and the first node may be connected to a second node. The first node may transmit a notification indicating a radio link failure of a backhaul link between the first node and the second node to an IAB MT (the UE 100). Upon receiving the notification, the IAB MT (UE 100) may determine that the wireless quality condition is met and perform SCell deactivation (or transition to the dormant BWP).

The operational flows in the above-described embodiments do not necessarily have to be executed in chronological order according to the order described in the flow diagrams. For example, steps in the operations may be performed in a different order than that described in the flow diagrams or may be performed in parallel. One or some of the steps in the operations may be removed and additional steps may be added to the process.

A program may be provided that causes a computer (the UE 100 or the node 200) to execute the operations according to the above-described embodiments. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM.

As used in the present disclosure, the phrases "based on" and "depending on/in response to" do not mean "based only on" or "only depending on/only in response to", unless expressly stated otherwise. The phrase "based on" means both "based only on" and "based at least in part on". The phrase "depending on" means both "only depending on" and "at least partially depending on". The terms "include", "comprise", and variations thereof do not mean to include only the items listed, but may include only the items listed, or may include additional items in addition to the items listed. The term "or" used in the present disclosure is not intended to be "exclusive or". Any reference to an element using a designation such as "first", "second", and the like as used in the present disclosure does not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

### (5) Supplements

Features relating to the embodiments described above are described below as supplements.

### (Supplement 1)

A user equipment for performing wireless communication with a master node and a secondary node by using dual connectivity in a mobile communication system, the user equipment including:
a receiver configured to receive, from the master node, information indicating a wireless quality condition required for the user equipment when deactivation processing is performed for a secondary cell group of the secondary node; and
a controller configured to measure wireless quality for the secondary cell group and evaluate whether the wireless quality condition is met, wherein
the controller is configured to perform the deactivation processing for the secondary cell group in response to the wireless quality condition being met.

### (Supplement 2)

The user equipment according to Supplement 1, wherein
the deactivation processing includes processing of causing the secondary cell group in an active state to transition to an inactive state.

### (Supplement 3)

The user equipment according to Supplement 1 or 2, wherein
the deactivation processing includes processing of causing a bandwidth portion in a non-dormant state in a primary cell of the secondary cell group to transition to a dormant state.

### (Supplement 4)

The user equipment according to any one of Supplements 1 to 3, further including:
a transmitter configured to transmit a notification regarding the deactivation processing to the master node in response to the wireless quality condition being met.

### (Supplement 5)

The user equipment according to Supplement 4,
wherein the controller is configured to complete the deactivation processing when the notification is transmitted or when an acknowledgment of the notification is received from the master node.

### (Supplement 6)

The user equipment according to any one of Supplements 1 to 5,
wherein the receiver is configured to receive a reference signal transmitted continuously in time from the secondary node on a primary cell of the secondary cell group, and
the controller is configured to measure, based on the reference signal, the wireless quality.

### (Supplement 7)

A node operating as a master node in a mobile communication system in which a user equipment performs wireless communication with the master node and a secondary node by using dual connectivity, the node including:
a controller configured to configure a secondary cell group of the secondary node in the user equipment; and
a transmitter configured to transmit, to the user equipment, information indicating a wireless quality condition required for the user equipment when deactivation processing is performed for the secondary cell group.

### (Supplement 8)

The node according to Supplement 7, wherein
the deactivation processing includes processing of causing the secondary cell group in an active state to transition to an inactive state.

### (Supplement 9)

The node according to Supplement 7 or 8, wherein
the deactivation processing includes processing of causing a bandwidth portion in a non-dormant state in a primary cell of the secondary cell group to transition to a dormant state.

### (Supplement 10)

The node according to any one of Supplement 7 to 9, further including:
a receiver configured to receive a notification regarding the deactivation processing from the user equipment in response to the wireless quality condition being met in the user equipment.

### (Supplement 11)

The node according to Supplement 10 wherein,
the controller is configured to stop downlink data transmission on the secondary cell group, when receiving the notification or when transmitting an acknowledgment of the notification to the user equipment.

### (Supplement 12)

A communication method to be used in a user equipment for performing wireless communication with a node by using dual connectivity in a mobile communication system, the communication method including the steps of:
receiving, from the node, information indicating a wireless quality condition required for the user equipment when deactivation processing is performed for a secondary cell group configured in the user equipment;
measuring wireless quality for the secondary cell group and evaluating whether the wireless quality condition is met; and
performing the deactivation processing for the secondary cell group in response to the wireless quality condition being met.

### (Supplement 13)

A communication method to be used in a node for performing wireless communication with a user equipment by using dual connectivity in a mobile communication system, the communication method including the steps of:
configuring a secondary cell group in the user equipment; and
transmitting, to the user equipment, information indicating a wireless quality condition required for the user equipment when deactivation processing is performed for the secondary cell group.

### REFERENCE SIGNS

1: Network
10: RAN
20: CN
100: UE
110: Receiver
120: Transmitter
130: Controller
140: Wireless communicator
200: Node
210: Transmitter
220: Receiver
230: Controller
240: NW communicator
250: Wireless communicator
300: CN apparatus

## Claims

1. A user equipment for performing wireless communication with a master node and a secondary node by using dual connectivity in a mobile communication system, the user equipment comprising:
a receiver configured to receive, from the master node, information indicating a wireless quality condition required for the user equipment when deactivation processing is performed for a secondary cell group of the secondary node; and
a controller configured to measure wireless quality for the secondary cell group and evaluate whether the wireless quality condition is met,
wherein the controller is configured to perform the deactivation processing for the secondary cell group in response to the wireless quality condition being met.

2. The user equipment according to claim 1, wherein
the deactivation processing comprises processing of causing the secondary cell group in an active state to transition to an inactive state.

3. The user equipment according to claim 1, wherein
the deactivation processing comprises processing of causing a bandwidth portion in a non-dormant state in a primary cell of the secondary cell group to transition to a dormant state.

4. The user equipment according to any one of claims 1 to 3, further comprising:
a transmitter configured to transmit a notification regarding the deactivation processing to the master node in response to the wireless quality condition being met.

5. The user equipment according to claim 4, wherein
the controller is configured to complete the deactivation processing when the notification is transmitted or when an acknowledgment of the notification is received from the master node.

6. The user equipment according to claim 1, wherein
the receiver is configured to receive a reference signal transmitted continuously in time from the secondary node on a primary cell of the secondary cell group, and
the controller is configured to measure, based on the reference signal, the wireless quality.

7. A node operating as a master node in a mobile communication system in which a user equipment performs wireless communication with the master node and a secondary node by using dual connectivity, the node comprising:
a controller configured to configure a secondary cell group of the secondary node in the user equipment; and
a transmitter configured to transmit, to the user equipment, information indicating a wireless quality condition required for the user equipment when deactivation processing is performed for the secondary cell group.

8. The node according to claim 7, wherein
the deactivation processing comprises processing of causing the secondary cell group in an active state to transition to an inactive state.

9. The node according to claim 7, wherein
the deactivation processing comprises processing of causing a bandwidth portion in a non-dormant state in a primary cell of the secondary cell group to transition to a dormant state.

10. The node according to any one of claims 7 to 9, further comprising:
a receiver configured to receive a notification regarding the deactivation processing from the user equipment in response to the wireless quality condition being met in the user equipment.

11. The node according to claim 10, wherein
the controller is configured to stop downlink data transmission on the secondary cell group, when receiving the notification or when transmitting an acknowledgment of the notification to the user equipment.

12. A communication method to be used in a user equipment for performing wireless communication with a node by using dual connectivity in a mobile communication system, the communication method comprising the steps of:
receiving, from the node, information indicating a wireless quality condition required for the user equipment when deactivation processing is performed for a secondary cell group configured in the user equipment;
measuring wireless quality for the secondary cell group and evaluating whether the wireless quality condition is met; and
performing the deactivation processing for the secondary cell group in response to the wireless quality condition being met.

13. A communication method to be used in a node for performing wireless communication with a user equipment by using dual connectivity in a mobile communication system, the communication method comprising the steps of:
configuring a secondary cell group in the user equipment; and
transmitting, to the user equipment, information indicating a wireless quality condition required for the user equipment when deactivation processing is performed for the secondary cell group.
